# DEMANDE DE BREVET EUROPEEN

(11) **EP 1 307 016 A2**
(43) Date de publication de la demande: **02.05.2003**
(21) Numéro de dépôt: 02292523.4
(22) Date de dépôt: 14.10.2002
(51) Int. Cl.: H04L 12/56

(54) **Procédé de transmission de paquets par l'intermédiaire d'un réseau de télécommunications utilisant le protocole IP**

(30) Priorité: 25.10.2001 FR 0113802
(71) Demandeur: ALCATEL, 75008 Paris (FR)
(72) Inventeur: Mahiddini, Patrice, 92700 Colombes (FR); Rose, Isabelle, 92500 Rueil Malmaison (FR)
(74) Mandataire: Smith, Bradford Lee

(57) **Abrégé**

L'invention concerne un procédé de réception de paquets par l'intermédiaire d'un réseau de télécommunications utilisant le protocole IP.

Le procédé consiste à analyser au moins le premier paquet arrivant, à calculer la bande passante et/ou le débit nécessaire à partir du résultat de l'analyse et à régler la bande passante ou le débit de réception en fonction du résultat du calcul.

Si le récepteur fait appel au protocole TCP, la bande passante, ou le débit, est ajusté par réglage de la durée (t) d'acquittement des paquets reçus.

## Description

L'invention est relative à un procédé de transmission de données dans un réseau de télécommunications utilisant le protocole IP. Elle concerne aussi un terminal et un dispositif de gestion de bande passante faisant appel à ce procédé.

Un réseau de télécommunications du type Internet est composé de parties diverses, inhomogènes, notamment avec des débits qui peuvent varier dans une large gamme d'une partie à une autre du réseau. Cette diversité, et aussi la simplicité, sont des raisons importantes du succès de ce réseau.

Mais la diversité et la simplicité entraînent des inconvénients gênants. En particulier, les protocoles de transport, tels que le protocole TCP, sont tels que si un utilisateur, c'est-à-dire une application cliente, télécharge des données en provenance d'un serveur, les données en cours de téléchargement auront tendance à occuper la bande maximale autorisée sur le canal de communication, cette transmission s'effectuant alors au détriment des autres utilisateurs.

Pour remédier à cet inconvénient, il a déjà été envisagé d'affecter aux paquets transmis sur le réseau Internet des bits indiquant une priorité. Mais la détermination d'une priorité dans le routage de paquets implique l'existence d'organes de contrôle ou de régulation efficaces qui n'existent pas dans un tel réseau, contrairement à d'autres réseaux, tels que le réseau ATM (Asynchronous Transfer Mode), où une priorité plus ou moins grande est affectée à chaque paquet. On sait en effet que, dans un réseau ATM, chaque paquet de données qui est transmis est assuré d'arriver à destination avec une qualité de service (QOS) garantie, c'est-à-dire que certains paquets, ceux ayant la plus grande priorité, seront assurés d'arriver à destination en un temps garanti et avec un taux d'erreurs inférieur à une limite déterminée ainsi qu'avec un débit assuré alors que d'autres paquets d'une priorité du rang immédiatement inférieur seront aussi acheminés en temps réel mais sans que le débit soit assuré ; d'autres données, de la priorité la moins élevée, ne seront pas transmises en temps réel.

L'invention a ainsi pour but d'assurer une qualité de service dans un réseau de type Internet (IP) sans cependant les moyens de contrôle complexes du réseau ATM.

A cet effet, le procédé de gestion du réseau conforme à l'invention prévoit, dans un terminal, d'analyser au moins le premier paquet d'un fichier arrivant, de calculer, à partir de cette analyse, le débit nécessaire ou le délai maximum entre des paquets successifs et de régler la bande passante ou le débit de réception en fonction du résultat du calcul. Dans une réalisation, on transmet, à partir du terminal, l'information de débit ou de délai à un noeud du réseau afin que le transfert des fichiers s'effectue selon le débit demandé ou avec un délai sensiblement égal à celui demandé.

Par exemple, si le terminal fait appel au protocole TCP (Transport Control Protocol), le débit, c'est-à-dire la vitesse de transmission, est réglé par la vitesse d'acquittement, c'est-à-dire que, dans le terminal, on détermine le temps séparant la réception d'un paquet du temps d'émission d'un signal d'acquittement. En effet, on sait que, dans le protocole TCP, c'est la réception d'un signal d'acquittement par un émetteur qui déclenche l'émission des paquets suivants vers le terminal.

Dans le cas du protocole UDP, sans acquittement, on effectue le réglage en augmentant ou diminuant le temps séparant les paquets.

Ainsi, pour réguler le débit dans une transmission Internet, et ainsi ne pas saturer la liaison (de façon à permettre la coexistence avec d'autres transmissions), il n'est pas nécessaire de prévoir de format particulier pour les données à transmettre. Il est seulement nécessaire de prévoir un moyen simple d'analyse dans le terminal et, éventuellement, dans le noeud du réseau.

Dans le noeud du réseau, on peut utiliser un moyen d'attribution des ressources actif et non passif qui permet d'attribuer à chaque terminal la (les) bande(s) passante(s) dont il a besoin.

On peut aussi noter que, de façon inhabituelle, l'invention combine deux couches distinctes de la technique Internet, à savoir, d'une part, la couche de transport TCP ou UDP constituée par un protocole ne reconnaissant pas les données et, d'autre part, la couche des applications, telle que HTTP, qui reconnaît les données et peut indiquer ou extraire les informations de débit ; par exemple avec des données de type JPEG ou MPEG les informations de débit se trouvent en un emplacement bien déterminé.

Ainsi, l'invention concerne un procédé de réception de paquets par l'intermédiaire d'un réseau de télécommunications utilisant le protocole IP, qui est caractérisé en ce qu'on analyse au moins le premier paquet arrivant, on calcule la bande passante et/ou le débit nécessaire à partir du résultat de l'analyse, et en ce qu'on règle la bande passante ou le débit de réception en fonction du résultat du calcul.

Dans une réalisation, le récepteur fait appel au protocole TCP et la bande passante, ou le débit, est ajusté par réglage de la durée d'acquittement des paquets reçus.

Selon une autre réalisation, le récepteur fait appel au protocole UDP et la bande passante ou le débit est ajusté par réglage du temps séparant la réception de deux paquets successifs.

De préférence, la bande passante demandée n'est accordée que si elle ne dépasse pas une limite prédéterminée.

On peut faire dépendre la bande passante attribuée des demandes de bandes passantes provenant d'autres utilisateurs. Dans un exemple, on fait dépendre la bande passante attribuée à un récepteur, d'une part, des utilisations, ou demandes de bandes passantes, des autres utilisateurs et, d'autre part, d'une prévision de bande passante des demandes futures de ces autres utilisateurs.

L'attribution de bande passante peut être effectuée à partir du noeud du réseau auquel est connecté l'utilisateur.

L'invention concerne aussi un terminal de télécommunications destiné à recevoir, après requête, des paquets selon le protocole IP par l'intermédiaire d'un réseau de type Internet qui est caractérisé en ce qu'il comporte un moyen pour analyser le contenu d'au moins le premier paquet reçu afin d'en déterminer la bande passante ou le débit nécessaire à la réception des paquets demandés et un moyen pour adapter la bande passante ou le débit de réception aux résultats fournis par le moyen d'analyse.

Dans un exemple, le terminal fait appel à un protocole du type TCP dans lequel, après réception d'un paquet ou d'un ensemble de paquets reçus, le récepteur envoie un accusé de réception vers l'émetteur afin que celui-ci continue l'émission, et le moyen d'adaptation de la bande passante ou du débit comporte un moyen pour faire varier la durée d'acquittement, c'est-à-dire la durée s'écoulant entre la réception et l'émission d'un accusé de réception.

Dans une autre réalisation, les paquets sont reçus selon un protocole du type UDP, sans accusé de réception adressé à l'émetteur, et le moyen de régulation de bande passante ou de débit comporte un moyen pour commander l'espacement entre les paquets reçus.

Le terminal peut comporter un moyen pour limiter la bande passante demandée.

Le terminal peut aussi comporter un moyen pour recevoir une autorisation de bande passante après émission d'une requête.

L'invention se rapporte également à un dispositif de gestion de bandes passantes attribuées à partir d'un noeud de réseau transportant des paquets numériques selon le protocole IP qui est caractérisé en ce qu'il comprend des moyens pour recevoir des demandes de bandes passantes ou de débit provenant de terminaux et un moyen pour attribuer ou refuser la bande passante demandée en fonction de la disponibilité globale de bandes passantes.

Ce dispositif comporte, dans un exemple, un moyen pour collecter les demandes de bandes passantes et pour établir des statistiques à partir de ces demandes afin d'effectuer des prévisions sur les demandes futures et de tenir compte de ces prévisions pour l'attribution de bandes passantes à chaque terminal.

D'autres caractéristiques et avantages de l'invention apparaîtront avec la description de certains de ses modes de réalisation, celle-ci étant effectuée en se référant aux dessins ci-annexés sur lesquels :
la figure 1 est un schéma d'un réseau classique de télécommunication,
les figures 2 et 3 sont des diagrammes illustrant des propriétés, connues, du protocole TCP,
la figure 2a est un diagramme analogue au diagramme de la figure 2 pour le protocole selon l'invention,
la figure 4 est un schéma montrant une partie des équipements d'un réseau conforme à l'invention, et
la figure 5 est un schéma plus détaillé de certaines parties du réseau représenté sur la figure 4.

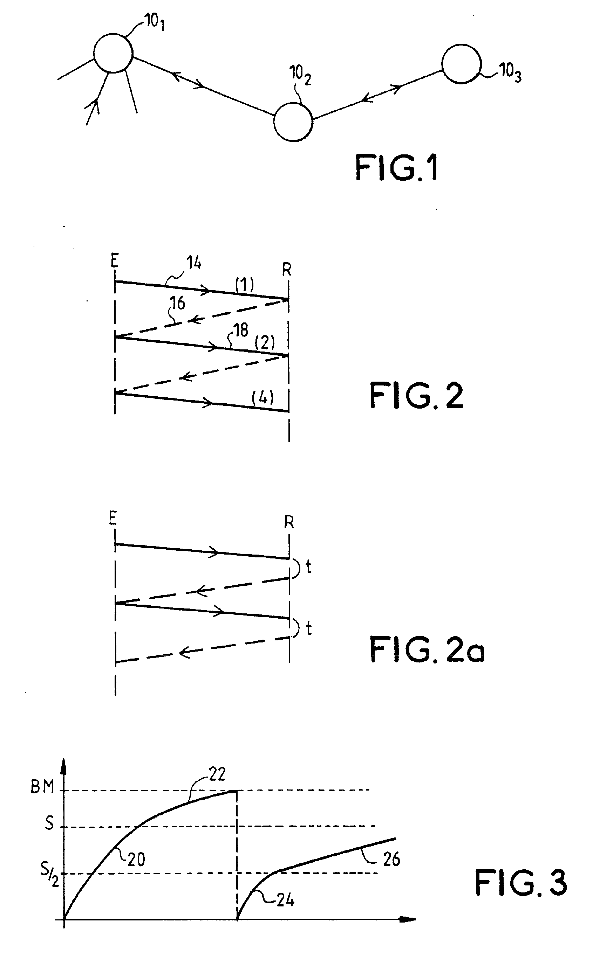

On rappelle tout d'abord qu'un réseau de communication du type Internet utilise des moyens de communication de types divers. En général, le réseau comporte une ossature avec des noeuds 10₁, 10₂, 10₃ etc. (Figure 1) entre lesquels les communications à débit important s'effectuent selon la norme ATM, c'est-à-dire en imposant une qualité de service QOS entre les noeuds. Mais, de chaque noeud vers les terminaux, il n'est en général pas possible, de façon simple, d'imposer une qualité de service quand on fait appel aux protocoles utilisés dans le réseau Internet, c'est-à-dire le protocole IP pour la couche réseau, le protocole de transport TCP ou UDP, et les protocoles d'application tels que HTTP.

Dans le mode de réalisation préféré de l'invention, on fait appel au protocole de transport TCP entre le noeud du réseau et le terminal et on prévoit que le système limite l'utilisation de la bande passante aux besoins de l'utilisateur en réglant la durée d'acquittement du protocole TCP.

Pour connaître ces besoins, le système effectue une analyse des paquets reçus (en général les premiers paquets suffisent pour cette analyse, laquelle est réalisée sur le contenu (la vidéo par exemple) et le type de contenu (le format MPEG1 par exemple)) pour en déduire le débit nécessaire à la bonne restitution du contenu transporté, ou encore le délai maximum entre deux paquets successifs, ces informations pouvant être la taille du fichier, la résolution à l'affichage, ou le nombre de frames ou trames par seconde.

Avant de décrire en détail un mode de réalisation de l'invention, on rappellera le principe du protocole TCP à l'aide des figures 2 et 3.

Quand un récepteur R a commandé à un émetteur E l'envoi des paquets de données, cet émetteur E commence par envoyer un seul paquet : ligne 14. Quand le récepteur R a reçu ce paquet, il émet immédiatement un signal d'acquittement 16 vers l'émetteur E qui lui envoie alors deux paquets : ligne 18. Après envoi du signal d'acquittement du récepteur vers l'émetteur, l'émetteur E envoie alors le double de paquets, c'est-à-dire quatre.

Ainsi, le nombre de paquets envoyés est, au départ, multiplié par 2 jusqu'à ce qu'on ait atteint un seuil prédéterminé, par exemple de 64. Quand ce seuil prédéterminé est atteint, on continue à augmenter le nombre de paquets envoyés au cours d'une transmission mais non plus par une augmentation à progression géométrique mais par une augmentation à progression arithmétique, c'est-à-dire qu'à chaque fois le nombre de paquets est augmenté d'une unité jusqu'à ce qu'on ait atteint la bande passante maximale.

Quand cette limite (bande passante maximale) est atteinte, alors on recommence le processus d'envoi des paquets mais on refixe le seuil prédéterminé à la valeur moitié.

L'évolution du débit en fonction du temps est ainsi représentée sur le diagramme de la figure 3 où l'on constate au départ une courbe 20 à accroissement exponentiel jusqu'au seuil S et, à partir du seuil S, une augmentation linéaire 22. Une fois la bande passante maximale BM atteinte, le débit revient à zéro, augmente de façon exponentielle (courbe 24) jusqu'au seuil S/2 puis remonte de façon linéaire (26) jusqu'à la bande passante maximale, et ainsi de suite.

Ce diagramme de la figure 3 montre que, lorsqu'on ne fait pas appel à l'invention, le protocole TCP présente deux inconvénients gênants : d'une part, la bande passante maximale est périodiquement occupée, s'il n'y a pas d'erreur, ce qui s'effectue au détriment d'autres applications, et, d'autre part, cette bande passante n'est pas utilisée de façon optimale.

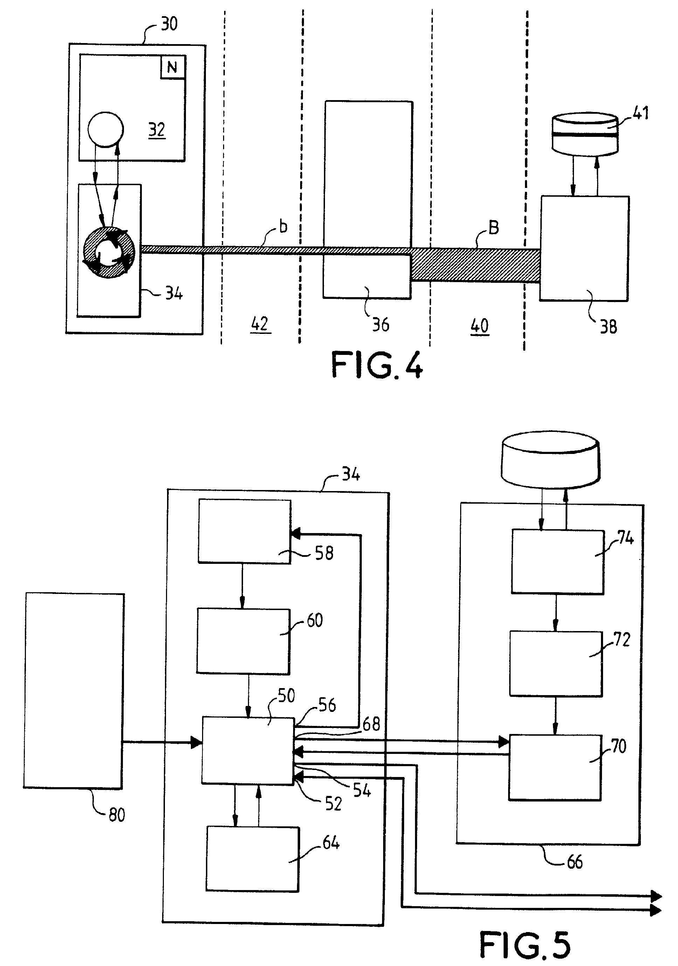

La figure 4 représente une partie du réseau Internet utilisée conformément à un mode de réalisation de l'invention.

Dans cet exemple, un terminal client 30 dispose d'un navigateur HTTP 32 auquel est associé un organe logiciel d'analyse et de régulation 34 et permettant de récupérer des informations de qualité de service pour le client, cet organe 34 étant représenté plus en détail sur la figure 5 qui sera décrite plus loin.

L'organe 34 est relié à un noeud 36 et ce noeud est lui-même relié au réseau Internet, notamment à un serveur 38.

Le fonctionnement va être expliqué à l'aide d'un exemple dans lequel le terminal client 30 cherche à télécharger de la vidéo, par exemple selon la norme MPEG1. Dans ce cas, le navigateur 32 déclenche ce téléchargement par l'envoi d'une requête HTTP associée à une connexion TCP. Le serveur distant 38 transmet le fichier requis qui se trouve dans sa mémoire de masse 40 constituée d'un disque dur (disque magnétique), d'un disque au format DVD, au format CD ou de tout autre moyen de stockage et ce fichier est transmis par le réseau Internet 40 au noeud 36, puis du noeud 36 par le réseau privé 42 (c'est-à-dire un réseau dans lequel chaque bout est contrôlé ou maîtrisé) vers le terminal 30.

Les en-têtes des paquets MPEG1 contiennent des indications sur le débit nécessaire pour que la vidéo soit visualisée sans retard, par exemple 2,51 Mbits/s. Ainsi, l'organe 34 extrait cette information des premiers paquets reçus et, à partir de cette information, il règle un temps d'acquittement TCP, à savoir le temps t entre la réception de données et l'envoi du signal d'acquittement (figure 2a), de façon à ce que ce débit ne dépasse pas la valeur nécessaire, c'est-à-dire 2,51 Mbits/s.

En variante, on fait appel au protocole UDP pour lequel il n'est pas prévu de signal d'acquittement. Dans ce cas, la régulation s'effectue par le contrôle de l'espacement, en temps, entre paquets successifs arrivants.

Dans un autre exemple, le fichier à charger ou visualiser est du type JPEG. Dans ce cas, l'organe 34 d'analyse et de régulation, récupère dans les en-têtes des premiers paquets le poids de chaque fichier et, pour déterminer le débit, considère que le téléchargement peut s'effectuer en une durée de l'ordre de 3 secondes.

Ainsi, dans le réseau Internet 40, la bande utilisée est B et, à partir du noeud 36, la bande est b (inférieure à B), comme le montre la figure 4.

Comme montré sur la figure 5, l'organe logiciel 34 d'analyse et de régulation qui permet de d'assurer une qualité de service QOS comporte un intercepteur/répartiteur 50 de paquets qui est relié par une entrée 52 et une sortie 54 au serveur distant 38 (figure 4). Le rôle de cet intercepteur/répartiteur est de transmettre, par une sortie 56, les premiers paquets reçus à un analyseur 58 qui extrait des en-têtes de ces premiers paquets reçus les informations utiles pour le calcul de la bande passante nécessaire, ces informations utiles étant notamment la taille du fichier, le nombre de trames par seconde, la résolution, etc.

Les données extraites des premiers paquets sont transmises à un calculateur 60 de largeur de bande nécessaire. La largeur de bande déterminée par le calculateur 60 est transmise à l'intercepteur/répartiteur 50 qui permet alors de régler la durée d'acquittement t en fonction de la bande nécessaire.

En outre, dans cet exemple, l'organe 34 comporte un lisseur de bande passante 64 qui impose des limites à la bande passante afin de respecter des contraintes prédéterminées, par exemple il calcule le débit en temps réel et ajoute ou retire du temps afin de conserver une valeur constante au débit.

Par ailleurs, dans cet exemple, l'intercepteur/répartiteur 50 est relié à un moyen 66 de gestion de la bande passante qui se trouve au noeud 36 (figure 4) et dont le rôle est d'autoriser ou non l'attribution de bandes passantes telles que déterminées par le calculateur 60, éventuellement corrigées par le lisseur 64. En effet, dans cette réalisation, on tient compte des besoins des autres utilisateurs et on attribue à chaque application 80 seulement la bande passante nécessaire pour la requête effectuée. Cette bande passante peut éventuellement être refusée ou diminuée si d'autres applications actives limitent la réserve de bande passante à une valeur inférieure à celle dont l'application a besoin.

Ainsi, l'intercepteur/répartiteur 50 est relié, par une entrée/sortie 68, à un moyen d'attribution de bande passante 70 qui détermine la bande passante à attribuer en fonction des données reçues d'un analyseur 72 et d'un moyen 74 de collecte de statistiques.

Ce moyen 74 collecteur de statistiques recueille les données des utilisateurs divers, à savoir les données locales du terminal et les données globales des divers utilisateurs connectés au noeud.

L'analyseur 72 permet de déterminer, à partir des données fournies par le collecteur 74, si la requête de bande passante de l'utilisateur peut être satisfaite. Il recueille aussi les utilisations antérieures de bande passante afin de prévoir la bande passante que pourra demander chaque application à chaque instant.

Ainsi, le collecteur 74 collecte les informations de bande passante des équipements de réseau et les informations de bandes passantes des utilisateurs à partir de leurs équipements.

L'analyseur 72 détermine non seulement la bande passante disponible mais il effectue aussi un calcul prévisionnel des disponibilités futures en fonction des données statistiques.

Le moyen 70 d'attribution de bande passante peut proposer à l'utilisateur d'autres solutions telles que, par exemple, une bande passante inférieure, afin de ne pas risquer de congestion du réseau. En variante, on propose à l'utilisateur d'attendre un temps pré-calculé avant de satisfaire sa demande.

## Revendications

1. Procédé de réception de paquets par l'intermédiaire d'un réseau de télécommunications utilisant le protocole IP, **caractérisé en ce qu'**on analyse au moins le contenu (video) et le type de contenu (MPEG1) du premier paquet arrivant, on calcule (60) la bande passante et/ou le débit nécessaire à partir du résultat de l'analyse, et **en ce qu'**on règle (70) la bande passante (b) ou le débit de réception en fonction du résultat du calcul.

2. Procédé selon la revendication 1, **caractérisé en ce que** la bande passante demandée n'est accordée que si elle ne dépasse pas une limite prédéterminée.

3. Procédé selon l'une quelconque des revendications précédentes, **caractérisé en ce qu'**on fait dépendre (72) la bande passante attribuée des demandes de bandes passantes provenant d'autres utilisateurs.

4. Procédé selon la revendication 3, **caractérisé en ce qu'**on fait dépendre la bande passante attribuée à un récepteur, d'une part, des utilisations, ou demandes de bandes passantes, des autres utilisateurs et, d'autre part, d'une prévision de bande passante des demandes futures de ces autres utilisateurs.

5. Procédé selon la revendication 3 ou 4, **caractérisé en ce que** l'attribution de bande passante est effectuée à partir du noeud du réseau auquel est connecté l'utilisateur.

6. Procédé selon l'une quelconque des revendications précédentes, **caractérisé en ce que** le récepteur faisant appel au protocole TCP, la bande passante, ou le débit, est ajusté par réglage de la durée (t) d'acquittement des paquets reçus.

7. Procédé selon l'une des revendications 1 à 5, **caractérisé en ce que** le récepteur faisant appel au protocole UDP, la bande passante ou le débit est ajusté par réglage du temps séparant la réception de deux paquets successifs.

8. Terminal (30) de télécommunications destiné à recevoir, après requête, des paquets selon le protocole IP par l'intermédiaire d'un réseau de type Internet, **caractérisé en ce qu'**il comporte un moyen (34) pour analyser le contenu (video) et le type de contenu (MPEG1) d'au moins le premier paquet reçu afin d'en déterminer la bande passante ou le débit nécessaire à la réception des paquets demandés, et un moyen pour adapter la bande passante, ou le débit de réception, aux résultats fournis par le moyen d'analyse.

9. Terminal selon la revendication 8, **caractérisé en ce que** le terminal faisant appel à un protocole du type TCP dans lequel, après réception d'un paquet ou d'un ensemble de paquets reçus, le récepteur envoie un accusé de réception vers l'émetteur afin que celui-ci continue l'émission, le moyen d'adaptation de la bande passante ou du débit comporte un moyen pour faire varier la durée (t) d'acquittement, c'est-à-dire la durée s'écoulant entre la réception et l'émission d'un accusé de réception.

10. Terminal selon la revendication 8, **caractérisé en ce que** les paquets étant reçus selon un protocole du type UDP, sans accusé de réception adressé à l'émetteur, le moyen de régulation de bande passante ou de débit comporte un moyen pour commander l'espacement entre les paquets reçus.

11. Terminal selon l'une quelconque des revendications 8, 9 et 10, **caractérisé en ce qu'**il comporte un moyen (64) pour limiter la bande passante demandée.

12. Terminal selon l'une quelconque des revendications 8 à 11, **caractérisé en ce qu'**il comporte un moyen pour recevoir une autorisation de bande passante après émission d'une requête.

13. Dispositif (66) de gestion de bandes passantes attribuées à partir d'un noeud de réseau transportant des paquets numériques selon le protocole IP, **caractérisé en ce qu'**il comprend des moyens (70) pour recevoir des demandes de bandes passantes ou de débit provenant de terminaux, et un moyen pour attribuer ou refuser la bande passante demandée en fonction de la disponibilité globale de bandes passantes.

14. Dispositif selon la revendication 13, **caractérisé en ce qu'**il comporte un moyen pour collecter les demandes de bandes passantes et pour établir des statistiques à partir de ces demandes afin d'effectuer des prévisions sur les demandes futures et de tenir compte de ces prévisions pour l'attribution de bandes passantes à chaque terminal.
